(19) Europäisches Patentamt
European Patent Office
Office européen des brevets

(11) Veröffentlichungsnummer: **0 017 214**
**B1**

# (12) EUROPÄISCHE PATENTSCHRIFT

(45) Veröffentlichungstag der Patentschrift: **02.06.82**

(51) Int. Cl.³: **C 09 B 57/04,** C 09 D 11/02, C 08 K 5/34, C 07 D 209/44

(21) Anmeldenummer: **80101736.9**

(22) Anmeldetag: **01.04.80**

## (54) Neue Isoindolinfarbstoffe und deren Verwendung.

(30) Priorität: **07.04.79 DE 2914086**

(43) Veröffentlichungstag der Anmeldung: **15.10.80 Patentblatt 80/21**

(45) Bekanntmachung des Hinweises auf die Patenterteilung: **02.06.82 Patentblatt 82/22**

(84) Benannte Vertragsstaaten: **BE CH DE FR GB IT LI**

(56) Entgegenhaltungen:
**DE-A-2 041 999**
**DE-A-2 814 526**
**DE-B-2 121 524**
**DE-B-2 628 409**

(73) Patentinhaber: **BASF Aktiengesellschaft, Carl-Bosch-Strasse 38, D-6700 Ludwigshafen (DE)**

(72) Erfinder: **Henning, Georg, Dr., Thorwaldsenstrasse 3, D-6700 Ludwigshafen (DE)**
Erfinder: **Lotsch, Wolfgang, Dr., Stettiner Strasse 32, D-6711 Beindersheim (DE)**

EP 0 017 214 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Neue Isoindolinfarbstoffe und deren Verwendung

Die Erfindung betrifft neue Isoindolinfarbstoffe und deren Verwendung.

Die neuen Isoindolinfarbstoffe haben die allgemeine Formel I

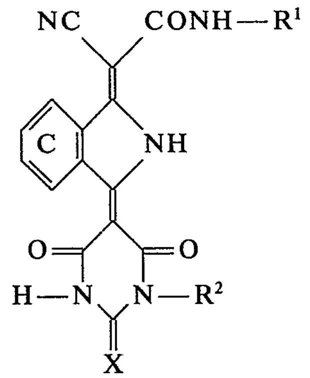

(I)

in der

- $R^1$ $C_1$- bis $C_4$-Alkyl und
- $R^2$ Wasserstoff oder $C_1$- bis $C_4$-Alkyl und
- X Sauerstoff, Schwefel, Imino oder Cyanimino bedeuten

und worin der Ring C gegebenenfalls durch nicht löslichmachende Gruppen substituiert ist.

Die neuen Isoindolinfarbstoffe der Formel I geben in Lacken, Druckfarben und Kunststoffen brillante Gelbfärbungen mit hoher Farbstärke, guten bis sehr guten Lichtechtheiten und Überlackierechtheiten. Die neuen Farbstoffe sind dem aus der DE-A-1 670 738, Beispiel 76, bekannten Farbstoff (Formel I mit $R^1 = R^2 = H$ und $X = O$) in der Farbstärke wesentlich überlegen.

DE-B-2 121 524 beschreibt Farbstoffe, die zu Isoindolinfarbstoffen der Formel I als nächstliegend anzusehen sind.

Als Substituenten kommen für $R^1$ und $R^2$ Äthyl, n-Propyl, Isopropyl, n-Butyl, Isobutyl, sec.-Butyl, vorzugsweise Methyl, in Betracht. Für $R^2$ ist Wasserstoff besonders bevorzugt.

Unter nicht löslich machende Substituenten werden solche verstanden, die weder in Wasser noch in organischen Lösungsmitteln Löslichkeit der Farbstoffe bewirken. Solche Substituenten sind beispielsweise Halogen, $C_1$- bis $C_6$-Alkyl, $C_1$- bis $C_6$-Alkoxy, Nitro, Aryl wie Phenyl, Carbamoyl oder C-Acylamino.

Als nicht löslich machende Substituenten sind Chlor, Brom, $C_2$- bis $C_4$-Alkanoylamino und Benzoylamino bevorzugt.

Von den Verbindungen der Formel I sind solche der Formel II bevorzugt:

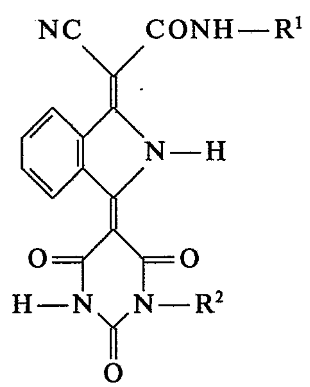

(II)

in der $R^1$ und $R^2$ die obengenannte Bedeutung haben. Ganz besonders bevorzugt ist die Verbindung der Formel III

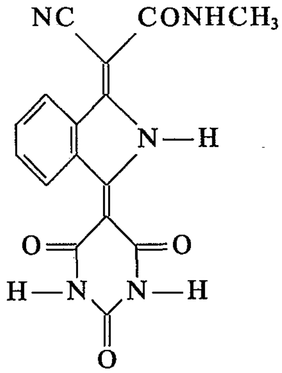

(III)

Die Farbstoffe der Formel I erhält man durch Kondensieren von einem Mol eines Monoaddukts von Äthylenglycol an ein Diiminoisoindolin der Formel IV

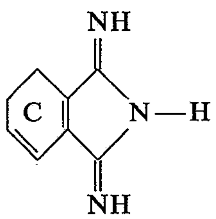

(IV)

mit einem Mol des Cyanacetamids der Formel V

$$NC—CH_2—CONH—R^1 \quad (V)$$

zum 1 - (Cyan - carbonamido - methylen) - 3 - iminoisoindolin (= Halbkondensationsprodukt) der Formel VI:

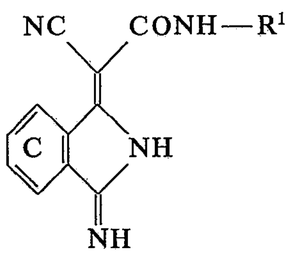

(VI)

welches in einer zweiten Stufe mit einem Mol der Verbindung der Formel VII

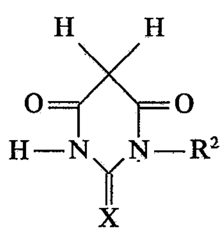

(VII)

zur Verbindung der Formel I kondensiert wird. In den Formeln haben $R^1$, $R^2$, C und X die vorstehend angegebene Bedeutung.

Die Synthese der Isoindolinfarbstoffe (I) kann entsprechend den Angaben der DE-A-1 670 748 in einem zweistufigen Verfahren unter Zwischenisolierung des Halbkondensationsproduktes (VI) in Gegenwart von organischen Lösungs- oder Verdünnungsmitteln durchgeführt werden.

Besonders gut verläuft die Umsetzung der Halbkondensationsprodukte (VI) mit den Barbitursäurederivaten (VII) in aliphatischen Carbonsäuren wie Essigsäure, Propionsäure, Buttersäure oder Mischungen davon, weshalb diese Lösungsmittel für den zweiten Reaktionsschritt bevorzugt sind. In diesem Fall erhält man bei der Herstellung direkt für Pigmentzwecke geeignete Farbstoffe.

Besonders wertvolle Pigmentformen der Farbstoffe (I) erhält man, wenn man beide Reaktionsschritte in Wasser, gegebenenfalls in Gegenwart von oberflächenaktiven Verbindungen ohne Zwischenisolierung des Halbkondensationsproduktes durchführt. In diesem Fall erfolgt die Kondensation des 1,3-Diiminoisoindolins (IV) mit dem Cyanacetamidderivat (V) bei Temperaturen

zwischen 10 und 100°C bei einem pH-Wert oberhalb von 7, vorzugsweise bei pH-Werten zwischen 8 und 11. Die Kondensation des Halbumsetzungsproduktes (VI) mit der Barbitursäure (VII) erfolgt bei Temperaturen zwischen 40 und 150°C bei pH-Werten unterhalb von 7, vorzugsweise bei pH-Werten zwischen 1 und 3.

Die Menge an Lösungsmittel oder Verdünnungsmittel ist nicht kritisch, wenn das Reaktionsgemisch rührbar ist. Im allgemeinen wendet man die 5- bis 40-, insbesondere die 7- bis 20fache Gewichtsmenge, bezogen auf Diiminoisoindolin (IV), an.

Im Falle der Synthese in überwiegend wäßrigem Medium oder in Wasser kann in Abwesenheit oder in Gegenwart von oberflächenaktiven Mitteln gearbeitet werden. Da im letzteren Fall in der Regel leichter dispergierbare, farbstarke Pigmentformen erhalten werden, wird die Kondensation vorzugsweise in Gegenwart von oberflächenaktiven Mitteln durchgeführt. Dabei kann das oberflächenaktive Mittel sowohl bei der Kondensation der 1. Stufe als auch vor oder nach der Kondensation der 2. Stufe zugegeben werden. Die Menge des oder der angewendeten oberflächenaktiven Mittel ist nicht kritisch und kann deshalb innerhalb weiter Grenzen variiert werden. Die untere vorteilhafte Anwendungsmenge liegt bei etwa 5 Gew.-%, bezogen auf Diiminoisoindolin. Zweckmäßigerweise wendet man 5 bis 400 Gew.-%, vorzugsweise 10 bis 100 Gew.-%, bezogen auf die angewandte Menge an Diiminoisoindolin, an.

Als oberflächenaktive Verbindungen kommen nichtionische, anionische oder kationische in Betracht, die üblicherweise als Dispergiermittel, Netzmittel und/oder Schutzkolloide verwendet werden. Als anionische oberflächenaktive Verbindungen kommen z. B. in Betracht:

$C_4$- bis $C_{20}$-Alkylbenzolsulfonsäuren, $C_4$- bis $C_{20}$-Alkylphenolsulfonsäuren, Mono- und Bis-$C_1$- bis -$C_{10}$-Alkylnaphthalinsulfonsäuren, partiell sulfoniertes Polystyrol, wasserlösliche Kondensationsprodukte von $\beta$-Naphthalinsulfonsäure und/oder $C_1$- bis $C_{10}$-Alkylnaphthalin-$\beta$-sulfonsäure und Formaldehyd, Kondensationsprodukte aus Phenolsulfonsäuren, Formaldehyd und Harnstoff, Kondensationsprodukte aus Phenol, Harnstoff, Formaldehyd und Natriumsulfit, Kondensationsprodukte aus Phenol-Formaldehyd, die mit Phenolsulfonsäure, Harnstoff und Formaldehyd nachkondensiert worden sind, Ligninsulfonsäuren, langkettige Fettsäuren, Harzsäuren in Form der Alkalimetall-, Erdalkalimetall- oder Ammoniumsalze.

Nichtionische oberflächenaktive Mittel sind z. B. Additionsprodukte von Äthylenoxid und/oder Propylenoxid an Alkanole, Alkandiole, Alkanpolyole, Phenole, Carbonsäuren, Carbonsäureamide, Mono-, Di- und Polyamine. Als weitere Mittel sind wasserquellbare bis in Wasser lösliche Polymerisate, wie Polymere aus Vinylpyridin, N-Vinylpyrrolidon, oder Copolymerisate aus wasserlöslichen Monomeren wie N-Vinylpyrrolidin, Acrylsäureamid und/oder Acrylsäure mit in Wasser unlöslichen Monomeren wie Acrylnitril, Methacrylsäureester, Acrylsäureester, Vinylacetat, Vinylchlorid und/oder Styrol, außerdem Polyvinylalkohol, $C_{10}$- bis $C_{20}$-Fettalkohole und Kondensationsprodukte aus Isobutyraldehyd, Formaldehyd und Harnstoff zu nennen.

Die oberflächenaktiven Mittel können auch in Form von Gemischen verwendet werden.

Bevorzugt sind $C_1$- bis $C_5$-Alkylnaphthalin-sulfonsäure, Kondensationsprodukte aus Phenol, Harnstoff und Formaldehyd, Additionsprodukte von Äthylenoxid und/oder Propylenoxid an $C_2$- bis $C_{20}$-Alkanole, Alkandiole, Alkantriole, aliphatische $C_{10}$- bis $C_{20}$-Carbonsäuren und/oder deren Amide, $C_{10}$- bis $C_{20}$-Fettalkohole und Kondensationsprodukte aus Isobutyraldehyd, Formaldehyd und Harnstoff als oberflächenaktive Mittel.

Die Verfahrensprodukte werden aus dem Reaktionsgemisch in üblicher Weise isoliert und können im allgemeinen direkt als Pigment verwendet werden. Man kann die Verfahrensprodukte aber auch nach an sich bekannten Formierungsverfahren in für den vorgesehenen Verwendungszweck optimale Pigmentformen überführen.

Die folgenden Beispiele sollen die Erfindung weiter erläutern. Die Teile und Prozentangaben beziehen sich auf das Gewicht.

## Beispiel 1

21 Teile des Monoaddukts von Äthylenglycol an Diiminoisoindolin und 10 Teile N-Methylcyanacetamid werden in 300 Teilen Wasser und 30 Teilen konzentrierter Ammoniaklösung 2 Stunden bei 90°C gerührt. Nach dem Abkühlen auf 60°C wird mit 20%iger Schwefelsäure auf pH 2 gestellt. Danach werden 13 Teile Barbitursäure eingetragen und 2 Stunden bei 90°C nachgerührt. Es wird heiß filtriert, mit Wasser neutral gewaschen und getrocknet. Man erhält 27 Teile des Pigments der Formel III.

Das Pigment liefert in Druckfarben, Lacken und Kunststoffen sehr farbstarke, brillante, grünstichige Gelbfärbungen mit guten Lichtechtheiten und guten Migrationsechtheiten.

## Beispiel 2

Man verfährt wie in Beispiel 1, kondensiert jedoch das Diiminoisoindolin mit N-Methylcyanacetamid bei 25°C; Dauer 2 Stunden. Dann wird der pH-Wert im Reaktionsgemisch auf 2 gestellt und läßt eine

70° C warme Lösung von 13 Teilen Barbitursäure in 150 Teilen Wasser zulaufen. Man rührt 3 Stunden bei 90° C, wobei der pH-Wert zwischen 2 und 2,3 gehalten wird. Man erhält 27 Teile des Pigments der Formel III, welches eingearbeitet in Druckfarben, Lacken und Kunststoffen dem entsprechend in Beispiel 1 dargestellten Pigment vergleichbare Färbungen ergibt.

### Beispiel 3

Man verfährt wie in Beispiel 1, gibt jedoch nach der Erniedrigung des pH-Wertes auf 2 5 Teile des Natriumsalzes eines $C_{13}$- bis $C_{17}$-Paraffindisulfonats zu und rührt 3 Stunden bei 95° C nach, saugt heiß ab, wäscht neutral und hilfsmittelfrei und trocknet. Man erhält 27 Teile des Pigments der Formel III, welches in Druckfarben eingearbeitet einen guten Glanz ergibt.

### Beispiel 4

21 Teile des Monoaddukts von Äthylenglycol an Diiminoisoindolin und 10 Teile N-Methylcyanacetamid werden in 200 Teilen Methanol 3 Stunden am Rückfluß erhitzt. Nach dem Abkühlen wird filtriert und mit Methanol gewaschen und getrocknet. Man erhält 20 Teile der Verbindung der Formel VIII.

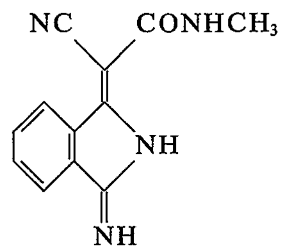

(VIII)

23 Teile der Verbindung der Formel VIII und 14 Teile Barbitursäure werden in 300 Teilen Eisessig 3 Stunden zum Sieden erhitzt. Es wird noch warm filtriert, mit Eisessig und Methanol gewaschen und getrocknet. Man erhält 29 Teile der Verbindung der Formel III.

Das Pigment liefert in Lacken und Kunststoffen besonders deckende grünstichige Gelbfärbungen mit sehr guten Licht- und Migrationsechtheiten.

### Beispiele 5 – 9

Gelbpigmente mit vergleichbar guten Eigenschaften und den angegebenen Farbtönen werden erhalten, wenn man nach den Beispielen 1 – 4 arbeitet und die in der Tabelle aufgeführten Cyanacetamide und Barbitursäuren mit Diiminoisoindolin kondensiert.

| Beispiel | Cyanacetamid | Barbitursäure | Farbstoff der Formel I mit | Farbton |
|---|---|---|---|---|
| 5 | $NC-CH_2CONHC_2H_5$ | 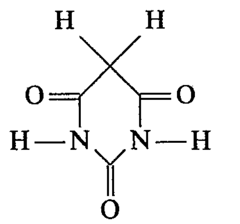 | $R_1 = -C_2H_5$<br>$R_2 = -H$<br>$X = O$ | grüngelb |
| 6 | $NC-CH_2CONHCH_3$ | 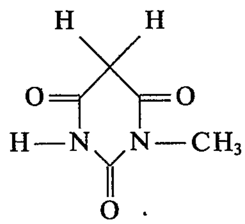 | $R_1 = -CH_3$<br>$R_2 = -CH_3$<br>$X = O$ | neutralgelb |
| 7 | $NC-CH_2CONHCH_3$ | 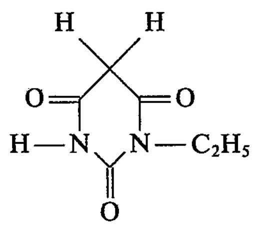 | $R_1 = -CH_3$<br>$R_2 = -C_2H_5$<br>$X = O$ | neutralgelb |
| 8 | $NC-CH_2CONHCH_3$ | 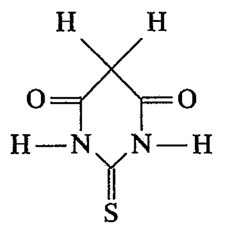 | $R_1 = -CH_3$<br>$R_2 = -H$<br>$X = S$ | orange |
| 9 | $NC-CH_2CONHCH_3$ | 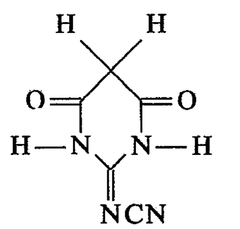 | $R_1 = -CH_3$<br>$R_2 = -H$<br>$X = NCN$ | neutralgelb |

Beispiel 10

(Anwendung)

a) Lack

10 Teile des nach Beispiel 1 erhaltenen Farbstoffes und 95 Teile Einbrennlackmischung, die 70% Kokosalkydharz (60%ig in Xylol gelöst) und 30% Melaminharz (ungefähr 55%ig gelöst in Butanol/Xylol) enthält, werden in einem Attritor angerieben. Nach dem Auftragen und einer Einbrennzeit von 30 Minuten bei 120°C werden grünstichig gelbe Volltonlackierungen mit guter Licht- und Überspritzechtheit erhalten. Durch Zumischen von Titandioxyd werden grünstichig gelbe Weißaufhellungen erzielt.

Verwendet man die in den Beispielen 2 bis 9 beschriebenen Farbstoffe, so werden Lackierungen in ähnlichen Farbtönen und ähnlichen Eigenschaften erhalten.

b) Kunststoff

0,5 Teile des nach Beispiel 4 erhaltenen Farbstoffes werden auf 100 Teile Polystyrolgranulat (Standard-Marke) aufgetrommelt. Das angefärbte Granulat wird durch Extrudieren homogenisiert (190 bis 195° C). Man erhält grünstichig gelbe Extrudate, deren Färbung gute Lichtechtheit aufweist.

Verwendet man eine Mischung aus 0,5 Teilen Farbstoff und 1 Teil Titandioxyd, so erhält man deckende, grünstichig gelbe Färbungen.

Verwendet man die Pigmentfarbstoffe, die nach den Beispielen 1, 2, 3 oder 5 bis 9 erhalten werden, so erhält man analoge Färbungen.

c) Druckfarbe

8 Teile des nach Beispiel 3 erhaltenen Pigmentfarbstoffes, 40 Teile eines mit Phenol/Formaldehyd modifizierten Kolophoniumharzes und 55 bis 65 Teile Toluol werden in einem Dispergieraggregat innig vermischt. Man erhält eine grünstichig gelbe Toluol-Tiefdruckfarbe. Die mit dieser Farbe erhaltenen Drucke weisen gute Lichtechtheit auf.

Bei Verwendung der Farbstoffe aus den Beispielen 1, 2 oder 4 bis 8 werden ähnliche Ergebnisse erhalten.

**Patentansprüche**

1. Isoindolinfarbstoffe der allgemeinen Formel

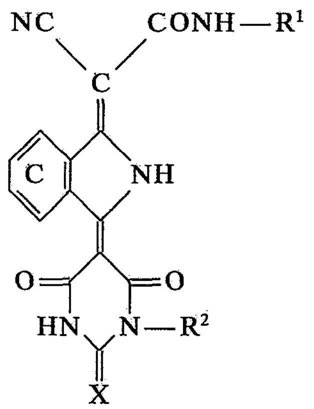

in der

$R^1$ $C_1$- bis $C_4$-Alkyl,
$R^2$ Wasserstoff oder $C_1$- bis $C_4$-Alkyl und
X Sauerstoff, Schwefel, Imino oder N-Cyanimino bedeuten

und worin der Ring C gegebenenfalls durch nicht löslich machende Gruppen substituiert ist.

2. Isoindolinfarbstoffe gemäß Anspruch 1, gekennzeichnet durch die Formel

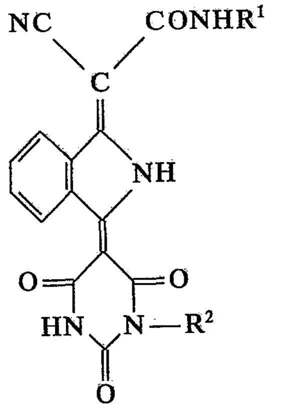

worin $R^1$ und $R^2$ die im Anspruch 1 angegebene Bedeutung haben.

3. Isoindolinfarbstoff der Formel gemäß Anspruch 2, dadurch gekennzeichnet, daß

$R^1$ Methyl und
$R^2$ Wasserstoff

bedeuten.

4. Verwendung der Isoindolinfarbstoffe gemäß den Ansprüchen 1, 2 oder 3 zum Färben von Lacken, Druckfarben und Kunststoffen.

**Claims**

1. An isoindoline colorant of the genral formula

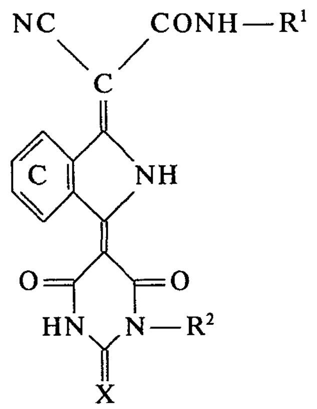

where

$R^1$ is $C_1-C_4$-alkyl,
$R^2$ is hydrogen or $C_1-C_4$-alkyl and
X is oxygen, sulfur, imino or N-cyanoimino,

and the ring C may or may not be substituted by groups which do not confer solubility.

2. An isoindoline colorant as claimed in claim 1, characterized by the formula

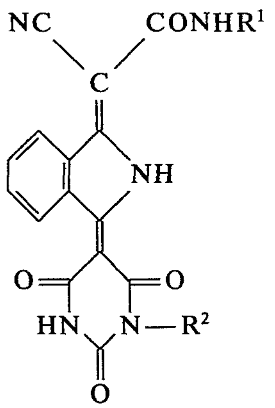

where $R^1$ and $R^2$ have the meanings given in claim 1.

3. An isoindoline colorant of the formula as claimed in claim 2, characterized in that

$R^1$ is methyl and
$R^2$ is hydrogen.

4. Use of the isoindoline colorant as claimed in claim 1, 2 or 3 for coloring surface coatings, printing inks and plastics.

**Revendications**

1. Colorants isoindoliniques de formule générale

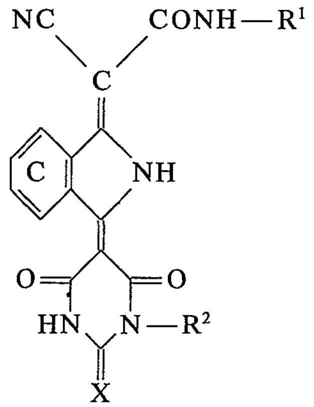

dans laquelle

$R^1$ représente un alocyle en $C_1$ à $C_4$,
$R^2$ représente un hydrogène ou un alcoyle en $C_1$ à $C_4$ et
X représente un oxygène, un soufre, un radical imino ou cyanimino

et dans laquelle le noyau C est éventuellement substitué par des groupes non solubilisants.

2. Colorants isoindoliniques selon la revendication 1, caractérisés par la formule

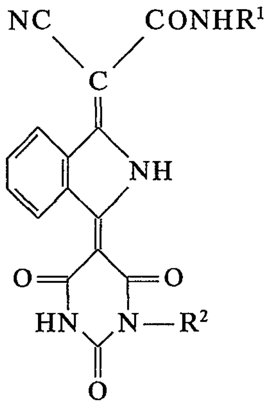

dans laquelle $R^1$ et $R^2$ ont les significations données dans la revendication 1.

3. Colorant isoindolinique répondant à la formule donnée dans la revendication 2, caractérisé en ce que

$R^1$ représente un méthyle et
$R^2$ un hydrogène.

4. Utilisation des colorants isoindoliniques selon l'une quelconque des revendications 1 à 3 pour la coloration de peintures-émail, d'encres d'imprimerie et de matières synthétiques.